# EUROPÄISCHE PATENTSCHRIFT

(11) **EP 0 695 832 B1**
(45) Veröffentlichungstag und Bekanntmachung des Hinweises auf die Patenterteilung: **02.07.1997**
(21) Anmeldenummer: 95111298.6
(22) Anmeldetag: 19.07.1995
(51) Int. Cl.: E02D 5/14, B29C 70/74

(54) **Verfahren und Werkzeug zum Einbringen einer Dichtung in Spundbohlenschlösser**
Method and apparatus for bringing a sealant inside a sheet pile lock
Méthode et dispositif pour introduire un joint d'étanchéité dans une serrure de palplanche

(30) Priorität: 04.08.1994 DE 4427561
(43) Veröffentlichungstag der Anmeldung: 07.02.1996
(73) Patentinhaber: Fried. Krupp AG Hoesch-Krupp, 45143 Essen (DE)
(72) Erfinder: Wieners, Andreas, Dipl.-Ing., D-45768 Marl (DE)

(56) Entgegenhaltungen:
- DE-A- 2 722 978
- DE-A- 4 345 026
- DE-C- 4 123 256

## Beschreibung

Die Erfindung betrifft ein Verfahren gemäß dem Oberbegriff des Anspruchs 1 sowie ein Werkzeug gemäß dem Anspruch 2.

Spundwände werden aus einer Vielzahl von Spundbohlen mit Hilfe ihrer Schlösser zu durchlaufenden Wänden verbunden. Aufgrund des notwendigen Spielraums in den Schlössern beim Einbringen der einzelnen Elemente sind die Wände nicht absolut wasserdicht. Der Einsatz von Schloßdichtungen erhöht die Wasserdichtigkeit erheblich. Ist die Spundwand nach dem Einbau frei zugänglich, kann die Schloßfuge nachträglich gedichtet werden. Diese Arbeit ist zeitaufwendig und kostenspielig. In einigen Fällen sind die Schloßfugen nach dem Einbau der Spundbohlen nicht mehr frei zugänglich und ein nachträgliches Dichten somit nicht mehr möglich. Vorteilhafter ist es daher, die Schlösser vor dem Einbringen zu dichten.

Ein derartiges und gattungsbildendes Verfahren ist aus der DE-B- 27 22 978 bekannt. Dabei wird das Dichtungsmaterial zunächst in die Schloßkammer der Spundbohle eingespritzt und in einem zweiten Arbeitsgang mittels einer Vorrichtung abgezogen und in die gewünschte Form gebracht. Diese Verfahrensweise ist sehr aufwendig und zeitraubend.

Von daher liegt der Erfindung die Aufgabe zugrunde, ein Verfahren und ein Werkzeug der eingangs genannten Art zu schaffen, das auf einfache und weniger zeitaufwendige Weise das Einbringen einer optimalen Dichtung in Spundbohlenschlösser erlaubt.

Nach der Erfindung wird die Aufgabe durch die Anspruch 1 bzw. 2 angegebenen Merkmale gelöst.

Der große Vorteil der Erfindung ist darin zu sehen, daß lediglich ein Arbeitsgang beim Einbringen und optimaler Profilierung der Dichtung unter Optimierung des Dichtungsmaterialeinsatzes notwendig ist. Die Dichtung kann sowohl werksseitig als auch vor Ort auf der Baustelle in die Spundbohlenschlösser eingebracht werden.

Die Erfindung ermöglicht es, sowohl ein- als auch zweikomponentige Dichtungsmassen sicher und maßgenau in die Schlösser von Spundbohlen, Flach-, Leicht- und Tafelprofilen einzubringen. Das eingesetzte Dichtungsmaterial kann wahlweise aus einer Kartusche oder direkt aus einer Zwei-Komponenten-Mischanlage über das Werkzeug in die Schloßkammer eingespeist werden.

Das Werkzeug zeichnet sich dadurch aus, daß das zur Bildung der Schloßdichtung eingesetzte Material erst beim Einbringen in das Schloß seine endgültige Form (Profilierung) erhält. Zusätzlich ermöglicht das Werkzeug auch die Profilierung der Dichtung außerhalb der Schloßkammer, so daß hierdurch Kontrolldichtungen profiliert werden können. Die Profilierung der Dichtung kann z.B. aus einer Doppeldichtung in Form von zwei höckerartigen Einzeldichtungen bestehen, prinzipiell ist jedoch die Art der Profilierung und Anzahl der Dichtungen im Schloß variabel.

Das Werkzeug ermöglicht es, die Dichtungen unabhängig von ihrer Form endlos auf ganzer Schloßlänge oder in Teilbereichen in die Schloßkammer einzubringen. Mit Hilfe des Werkzeuges kann die Dichtung manuell oder maschinell in die Schloßkammer eingebracht werden.

Das Werkzeug zeichnet sich weiter dadurch aus, daß durch variablen Einpreßdruck der verwendeten Materialien und die wahlweise Einstellung der Ziehgeschwindigkeit mit der das Werkzeug durch die Schloßkammer geführt wird, eine optimale Profilierung der Dichtung erreicht wird.

Spundbohlenschlösser unterliegen bei der Fertigung gewissen Toleranzen - s. Technische Lieferbedingungen für Stahlspundbohlen, Fassung 1992 -. Durch die vorher genannte Arbeitsweise ist es unter Benutzung des Werkzeuges möglich, die Abmessung der Dichtung den Schloßtoleranzen anzupassen und damit die Maßhaltigkeit der Dichtung zu gewährleisten. Die Maßhaltigkeit ist Voraussetzung für einen optimalen Dichtungseffekt.

Durch die Anordnung von rückspringenden Radien am Werkzeug wird eine Verbindung der gewählten Anzahl von Dichtungslippen hergestellt, so daß eine größere Haftfläche zwischen den einzelnen Dichtungen und der Schloßkammer erreicht wird.

Das Werkzeug stützt die Materialien im seitlichen Bereich der Schloßkammer während des Einbringvorganges, so daß ein Absacken der verwendeten Materialien verhindert wird und somit die gewünschte Formtreue und Maßhaltigkeit gegeben ist.

Anhand der Zeichnung wird die Erfindung im folgenden näher erläutert.

Es zeigt
- Fig. 1: ein Werkzeug in Draufsicht,
- Fig. 2: ein anderes Werkzeug in Draufsicht,
- Fig. 3: das Werkzeug nach Fig. 1 in Ansicht des Pfeils A,
- Fig. 4: das Werkzeug nach Fig. 1 in einer Schloßkammer einer Spundbohle in Draufsicht.

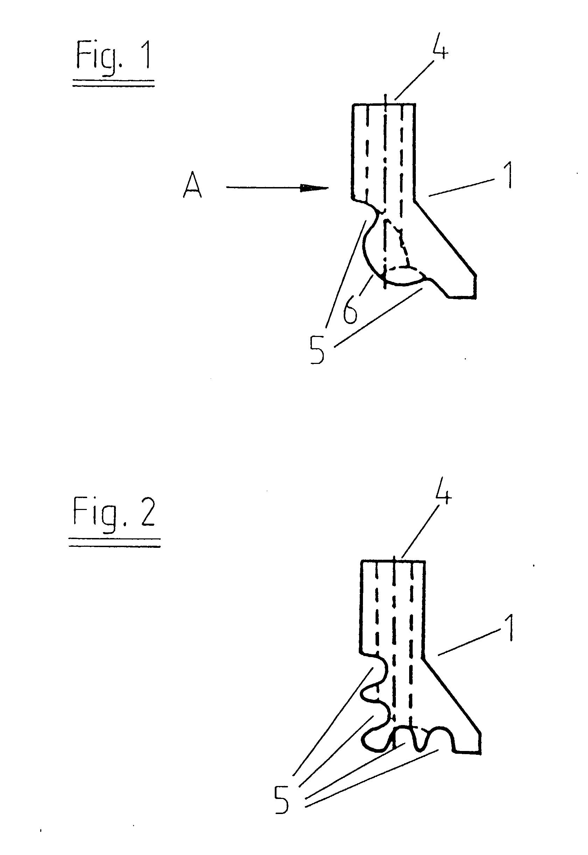

Wie aus den Fig. 1 bis 4 hervorgeht, weist das Werkzeug 1 zum Einbringen einer Dichtung in die Schloßkammer 2 einer Spundbohle 3 im Querschnitt eine Profilform auf, die im wesentlichen der Schloßkammer 2 entspricht. Zum rückseitigen Zuführen von Dichtungsmaterial z. B. mittels einer nicht dargestellten Kartusche weist das Werkzeug 1 eine durchgehende Querbohrung 4 auf. Zur Bildung von Dichtungslippen ist das Werkzeug 1 schloßkammer-seitig mit zwei (Fig. 1) oder mehreren (Fig. 2) Ausnehmungen 5 in Längsrichtung der Schloßkammer 2 versehen, die mit der durchgehenden Querbohrung 4 direkt in Verbindung stehen.

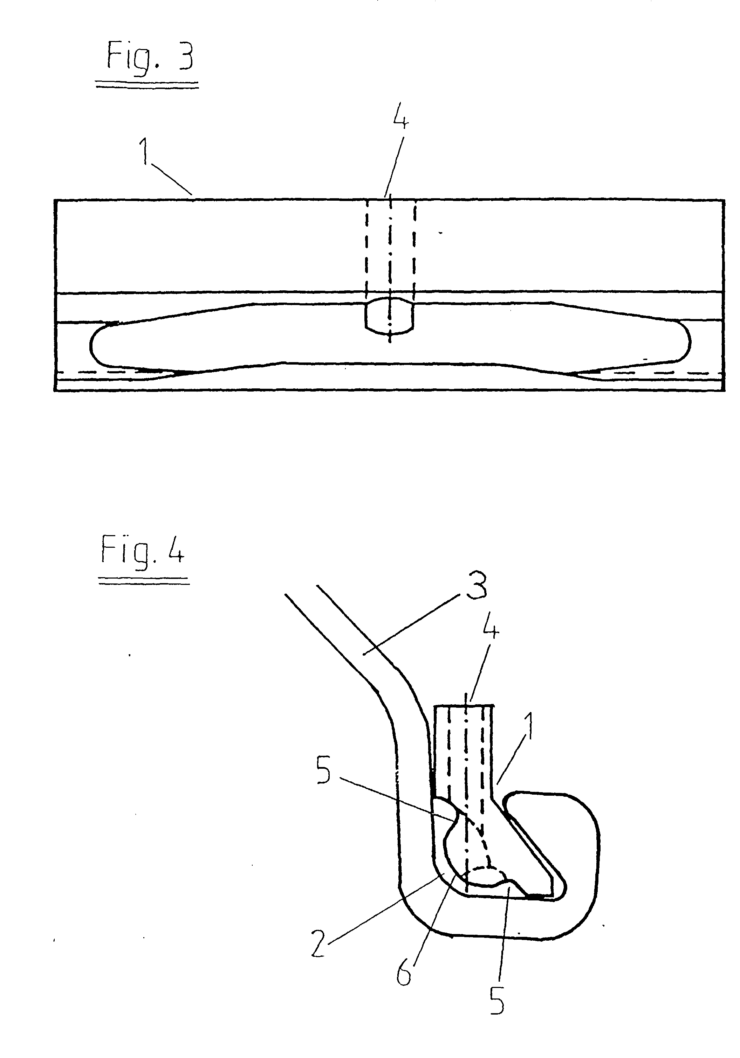

Wie die Fig. 1 und 4 weiterhin zeigen, weist das Werkzeug 1 zwischen den Ausnehmungen 5 zusätzlich einen rückspringenden Radius 6 auf, was bewirkt, daß die Dichtungslippen der fertigen Dichtung in Verbindung stehen, so daß eine größere Haftfläche zwischen der Dichtung und der Schloßkammer 2 erreicht wird.

Zur Bildung der Dichtung in der Schloßkammer 2 wird geeignetes Dichtungsmaterial über die durchgehende Querbohrung 4 des Werkzeuges 1 in die Schloßkammer 2 gepreßt, wobei gleichzeitig das Werkzeug 1 in Längsrichtung durch die Schloßkammer 2 geführt wird. Dadurch wird das Dichtungsmaterial entsprechend der schloßkammerseitigen Ausbildung des Werkzeuges 1 mit zwei oder mehreren senkrechten Ausnehmungen 5 und rückspringenden Radien 6 in der Schloßkammer 2 an der Einbringstelle direkt profiliert.

## Patentansprüche

1. Verfahren zum Einbringen einer Dichtung in Spundbohlenschlösser, wobei Dichtungsmaterial in die Schloßkammer der Spundbohle eingebracht und mittels eines durch die Schloßkammer über die Länge der Spundbohle geführten Werkzeuges geformt wird, **dadurch gekennzeichnet**, daß dieses Werkzeug im Querschnitt im wesentlichen dem Profil der Schloßkammer entspricht und schloßkammerseitig eine oder mehrere Ausnehmungen aufweist, die in Längsrichtung der Schloßkammer verlaufen und mit ihrem Querschnitt der gewünschten Profilform der Dichtung entsprechen, daß dieses Werkzeug eine durchgehende Querbohrung aufweist, die bis direkt in den Bereich der Ausnehmungen am Werkzeug reicht, durch die das Dichtungsmaterial von der der Schloßkammer abgewandten Seite des Werkzeugs her zugeführt wird, und daß das Dichtungsmaterial in die Schloßkammer gepreßt und gleichzeitig mittels des Werkzeuges profiliert wird, wobei das Dichtungsmaterial an der Einbringstelle an den Ausnehmungen des Werkzeuges seine Profilierung und damit seine endgültige Form erhält.

2. Werkzeug zum Einbringen einer Dichtung in Spundbohlenschlösser, wobei das Werkzeug (1) im Querschnitt im wesentlichen dem Profil der Schloßkammer (2) entspricht und schloßkammerseitig eine oder mehrere Ausnehmungen (5) aufweist, die in Längsrichtung der Schloßkammer (2) verlaufen und mit ihrem Querschnitt der gewünschten Profilform der Dichtung entsprechen, das Werkzeug (1) eine durchgehende Querbohrung (4) bis direkt in den Bereich der Ausnehmungen (5) aufweist, durch die das Dichtungsmaterial von der der Schloßkammer (2) abgewandten Seite des Werkzeugs (1) her zuführbar und in die Schloßkammer (2) an der Einbringstelle preßbar ist, und das Werkzeug (1) über die Länge der Spundbohle (3) durch die Schloßkammer (2) führbar ist.

## Claims

1. Method for introducing a seal into sheet pile locking devices wherein the sealing material is introduced into the locking chamber of the sheet pile and shaped by means of a tool guided through the locking chamber over the length of the sheet pile, characterised in that this tool corresponds in its cross section substantially to the profile of the locking chamber and comprises on the locking chamber-side one or a plurality of recesses which extend in the longitudinal direction of the locking chamber and correspond in their cross-section to the desired profiled shape of the seal, furthermore that this tool comprises a through-going transverse bore which extends as far as directly into the region of the recesses on the tool through which the sealing material is directed from the side of the tool remote from the locking chamber and furthermore that the sealing material is pressed into the locking chamber and is simultaneously profiled by means of the tool, wherein the sealing material is profiled at the insertion site at the recesses of the tool and thus achieves its final shape.

2. Tool for introducing a seal into sheet pile locking devices, wherein the tool (1) corresponds in cross-section substantially to the profile of the locking chamber (2) and comprises on the locking chamber-side one or a plurality of recesses (5) which extend in the longitudinal direction of the locking chamber (2) and correspond in their cross-section to the desired profiled shape of the seal, the tool (1) comprises a through-going transverse bore (4) which extends as far as directly into the region of the recesses (5) through which the sealing material can be introduced from the side of the tool (1) remote from the locking chamber (2) and can be pressed into the locking chamber (2) at the site where it is introduced and the tool (1) can be guided through the locking chamber (2) over the length of the sheet pile (3).

## Revendications

1. Procédé pour la mise en place d'un joint d'étanchéification dans un raccord de palplanche, dans lequel un matériau d'étanchéification est mis en place dans le logement de raccord de la palplanche, et est façonné au moyen d'un outil guidé par le logement de raccord sur la longueur de la palplanche, caractérisé en ce que cet outil correspond essentiellement, en section transversale, au profil du logement de raccord et présente du côté du logement de raccord un ou plusieurs évidements qui s'étendent dans la direction longitudinale du logement de raccord et correspondent en section transversale au profil souhaité du joint d'étanchéification, en ce que cet outil présente un alésage transversal traversant, qui s'étend directement jusque dans la région des évidements de l'outil, par lequel le matériau d'étanchéification est amené à partir du côté de l'outil opposé au raccord, et en ce que le matériau d'étanchéification est pressé dans le logement de raccord et est en même temps profilé au moyen de l'outil, grâce à quoi le matériau d'étanchéification reçoit son profil et ainsi sa forme finale, au lieu d'introduction, dans les évidements de l'outil.

2. Outil pour la mise en place d'un joint d'étanchéification dans un raccord de palplanche, dans lequel l'outil (1) correspond essentiellement en section transversale au profil du logement de raccord (2) et présente du côté du logement de raccord un ou plusieurs évidements (5), qui s'étendent dans la direction longitudinale du logement de raccord (2) et dont la section transversale correspond au profil souhaité du joint d'étanchéification, l'outil (1) présente un alésage transversal traversant (4) qui s'étend directement jusque dans la région des évidements (5), par lequel le matériau d'étanchéification est introduit à partir du côté de l'outil (1) opposé au logement de raccord (2) et peut être pressé dans le logement de raccord (2) au lieu d'insertion, et l'outil (1) peut être guidé sur la longueur de la palplanche (3) par le logement de raccord (2).
